# EUROPEAN PATENT APPLICATION

(11) **EP 4 632 879 A1**
(43) Date of publication of application: **15.10.2025**
(21) Application number: 24757237.3
(22) Date of filing: 14.02.2024
(51) Int. Cl.: H01M 10/658, H01M 10/655, H01M 10/6556, H01M 50/30, H01M 50/207, H01M 50/291

(54) **BATTERY PACKAGE**

(30) Priority: 14.02.2023 KR 20230019182
(71) Applicant: LG Energy Solution, Ltd., Seoul 07335 (KR)
(72) Inventor: JANG, Sunghwan, Daejeon 34122 (KR); SEONG, Junyeob, Daejeon 34122 (KR); SHIN, Juhwan, Daejeon 34122 (KR)
(74) Representative: Plasseraud IP
(86) International application number: PCT/KR2024/095112
(87) International publication number: WO 2024/172516

(57) **Abstract**

A battery package is disclosed. The battery package of the present invention includes:: pack case; a plurality of battery modules accommodated in an accommodating space of the pack case; a drain arranged under the plurality of battery modules; and a thermally conductive member arranged between the plurality of battery modules and the drain, the thermally conductive member melting at a predetermined temperature or higher and flowing down to the drain.

## Description

### [TECHNICAL FIELD]

This application claims the benefit of priority based on Korean Patent Application No. 10-2023-0019182 filed on February 14, 2023, entire content disclosed in the document of the patent applications is included as a part of this specification.

The present invention relates to a battery package capable of blocking thermal conduction to an adjacent battery module through a lower plate of a pack case during a thermal runaway of a battery module and preventing a chain reaction of thermal runaway of the adjacent battery module.

### [BACKGROUND ART]

Generally, secondary batteries include an anode, a cathode and an electrolyte, and generate electrical energy using chemical reactions. The use of secondary batteries is gradually increasing due to the advantage of being able to charge and discharge. Since lithium secondary batteries among such secondary batteries have a high energy density per unit weight, lithium secondary batteries are widely used as a power source for electronic communication devices or as a driving source for high-output hybrid vehicles and electric vehicles.

In terms of the shape of these secondary batteries, demand is increasing for prismatic battery cells and pouch-type battery cells that may be applied to products such as mobile phones due to their thin thickness. In terms of materials of battery cells, demand is increasing for lithium battery cells such as lithium-ion batteries and lithium-ion polymer batteries with high energy density, discharge voltage and output stability.

The types of secondary batteries widely used today include lithium ion batteries, lithium polymer batteries, nickel cadmium batteries, nickel hydrogen batteries and nickel zinc batteries. The operating voltage of these battery cells is approximately 2.5V to 4.2V. When a higher output voltage is required, a battery module is constituted by connecting multiple battery cells in series, and a battery pack is constituted by connecting multiple battery modules. **In** addition, a battery pack is constituted by connecting multiple battery cells in parallel according to the charge and discharge capacity required for the battery pack. Accordingly, the number of battery cells and the electrical connection structure of the battery pack may be selected in various ways according to the required output voltage or charge and discharge capacity.

In the battery package, a barrier beam is installed across a pack case to divide an accommodating space where the battery module is accommodated into a plurality of sections. In the battery package, a thermal resin is disposed between the lower surface of each battery module and the lower plate of the pack case. Accordingly, the thermal energy generated from the battery module is transmitted through the thermal resin and the lower plate. In addition, a heat sink may be additionally installed on the inside or outside of the lower plate to improve the heat dissipation performance of the battery package. In addition, a firewall may be installed between multiple battery modules to prevent flames from spreading to neighboring battery modules.

However, in some cases, the heat generated from the battery module during the charge and discharge process of the battery pack is not effectively dissipated. In such case, the battery module may be degraded as heat is accumulated in some battery module, and thermal runway may occur when the degradation of the battery module is rapidly accelerated.

When thermal runaway occurs in some of the plurality of battery modules, thermal propagation to the neighboring battery modules may progress rapidly through the thermal resin with high thermal conductivity and the lower plate of the pack case, which may promote the chain reaction of thermal runaway. Accordingly, the risk of ignition and explosion of the battery package increases.

In addition, conventionally, development of technology has been focused on using thermal resin to more quickly dissipate thermal energy in the event of ignition or thermal runaway of the battery module. When a thermal resin with excellent heat dissipation performance is embedded in the battery package, thermal propagation to the neighboring battery module may be further accelerated through the thermal resin and the lower plate during when thermal runaway of the battery module. Accordingly, the risk of ignition and explosion of the battery package may be further increased.

In addition, the battery module includes a structure wherein a resin separator is laminated between the anode and the cathode. The polyethylene separator decomposes at approximately 130°C, and the polypropylene separator begins to decompose at approximately 170°C. The electrolyte solution decomposes at approximately 200°C and releases heat. After the battery module rapidly deteriorates in a short period of time, thermal runaway begins at approximately 600-800°C. Accordingly, a technology is required to block the chain reaction of thermal runaway before the battery module deteriorates to the starting temperature of thermal runaway.

The background art of the present invention is disclosed in Korean Patent Application Publication No. 2022-0035770 (published on March 22, 2022, titled Battery Pack With Heat Diffusion Prevention Structure Between Battery Modules).

### [DETAILED DESCRIPTION OF THE INVENTION]

### [TECHNICAL PROBLEM]

In order to solve above-described problems, it is an object of the present invention to provide a battery package capable of improving heat dissipation performance during normal operation of the battery package.

It is an object of the present invention to provide a battery package wherein an insulation space may be formed as a thermally conductive member melts during thermal runaway of a battery module.

It is an object of the present invention to provide a battery package wherein thermal energy may be prevented from being transmitted to a neighboring battery module during thermal runaway of a battery module.

It is an object of the present invention to provide a battery package capable of preventing a battery module from being reheated by high-temperature gas generated during thermal runaway of a battery module.

It is an object of the present invention to provide a battery package capable of stably maintaining an insulation space between a battery module and a drain.

In addition, it is an object of the present invention to provide a battery package capable of blocking thermal energy from being diffused or transmitted to a neighboring accommodating space by a barrier beam despite some of the battery modules undergoing thermal runaway.

### [TECHNICAL SOLUTION]

In order to solve the above-described problem, a battery package according to the present invention may include: a pack case; a plurality of battery modules accommodated in an accommodating space of the pack case; and a thermally conductive member under the battery module.

The thermally conductive member is configured to melt at a predetermined temperature or higher.

The battery package includes a drain under the plurality of battery modules.

At least a portion of the thermally conductive member is above the drain.

The thermally conductive member may be between the plurality of battery modules and the drain.

The thermally conductive member may be configured to melt at a predetermined temperature or higher and flow down to the drain.

The space where the thermally conductive member is present before melting constitutes an insulation space between the battery module and the drain.

The predetermined temperature may be lower than the thermal runaway temperature of the battery module. Accordingly, the insulation space between the battery module and the drain is formed after the thermally conductive member melts during thermal runaway of the battery module.

The predetermined temperature may be 600°C or lower, and preferably 550°C or lower.

The predetermined temperature may be higher than the collapse temperature of the separator.

The predetermined temperature may be higher than the decomposition temperature of the electrolyte solution.

The predetermined temperature may be higher than lower one of the collapse temperature of the separator and the decomposition temperature of the electrolyte solution.

The predetermined temperature may be higher than higher one of the collapse temperature of the separator and the decomposition temperature of the electrolyte solution.

The predetermined temperature may be higher than 120°C, preferably higher than 200°C.

The drain may include: a plurality of support ribs on the lower plate of the pack case and supporting the thermally conductive member; a plurality of drain holes between the plurality of support ribs; and a plurality of drain channels under the drain holes.

The plurality of drain channels may be on the lower plate in parallel to each other.

The plurality of drain holes are along lengthwise direction of the plurality of drain channels.

The plurality of support ribs may include a thermally conductive material.

The drain may further include one or more ventilation channels connecting the plurality of drain channels.

The one or more ventilation channels may be connected to lengthwise ends of the plurality of drain channels.

The one or more ventilation channels may be perpendicular to the plurality of drain channels.

The drain may further include a plurality of cooling channels in the lower plate.

The plurality of cooling channels may be in the plurality of support ribs.

The plurality of cooling channels may be parallel to a lengthwise direction of the support rib.

The battery package may further include a load supporting member supporting the plurality of battery modules.

The load supporting member may be configured to prevent the plurality of battery modules from descending when the thermally conductive member melts and flows down to the drain.

The load supporting member may support two lengthwise ends of the plurality of battery modules.

The battery package may further include a plurality of barrier beams across the pack case to partition the accommodating space.

The plurality of barrier beams may be perpendicular to a lengthwise direction of the plurality of drain channels.

The battery package may further include a plurality of center beams between and supporting the plurality of barrier beams.

### [ADVANTAGEOUS EFFECTS]

According to the present invention, the thermally conductive member transmits thermal energy generated in the battery module during normal operation of the battery package to the drain and lower plate. Accordingly, the heat dissipation performance may be improved during normal operation of the battery package.

According to the present invention, the thermally conductive member melts during thermal runaway of the battery module, and the melted material of the thermally conductive member flows down to the drain. An insulation space is formed at the portion where the thermally conductive member was present. Accordingly, heat of approximately 600-800°C generated during thermal runaway of the battery module may be blocked from being conducted to the drain and lower plate by the insulation space.

According to the present invention, even when the high-temperature heat generated in the battery module is conducted to the drain and lower plate through the insulation space to some extent, a chain reaction of thermal runaway may be prevented from occurring in the neighboring battery module.

According to the present invention, since a plurality of battery modules are isolated in respective accommodating spaces thereof by the barrier beam and the center beam, the barrier beam and the center beam may prevent thermal energy from spreading or transmitting to the neighboring accommodating spaces despite some battery modules undergoing thermal runaway.

According to the present invention, since the ventilation channel discharges the gas generated during thermal runaway of the battery module to the outside, the battery module undergoing thermal runaway may be prevented from being reheated by high-temperature gas.

According to the present invention, the load supporting member may prevent the battery module from descending when the thermally conductive member melts and flows down to the drain. Accordingly, the insulation space between the battery module and the drain may be stably maintained.

In addition to the advantageous effects described above, specific effects of the present invention will be described further while describing specific details of the present invention.

### [BRIEF DESCRIPTION OF DRAWINGS]

FIG. 1 is a perspective view schematically illustrating a battery package according to the present invention.
FIG. 2 is a cross-sectional view schematically illustrating the battery package in FIG. 1 with a thermally conductive member and a drain installed under the battery module.
FIG. 3 is a cross-sectional view schematically illustrating the battery package in FIG. 1 taken along the line I-I.
FIG. 4 is a plan view schematically illustrating the battery package in FIG. 1 with a support rib and a drain hole formed in the lower plate thereof according to the present invention.
FIG. 5 is a cross-sectional view schematically illustrating a thermally conductive member melting and flowing down into a drain hole during thermal runaway of the battery module according to the present invention.

**[DESCRIPTION OF REFERENCE NUMERALS]**

| | | | |
|---|---|---|---|
| 100: | battery package | 110: | pack case |
| 111: | lower plate | 112: | side plate |
| 113: | upper plate | 115: | barrier beam |
| 116: | center beam | 118: | accommodating space |
| 120: | battery module | 130: | drain |
| 131: | support rib | 133: | drain hole |
| 135: | drain channel | 137: | ventilation channel |
| 139: | cooling channel | 140: | thermally conductive member |
| 141: | melted material | 143: | insulation space |
| 150: | load supporting member | | |

### [DETAILED DESCRIPTION OF THE PREFERRED EMBODIMENTS]

Hereinafter, a preferred embodiment of the present invention will be described.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a battery package according to an embodiment of the present invention will be described.

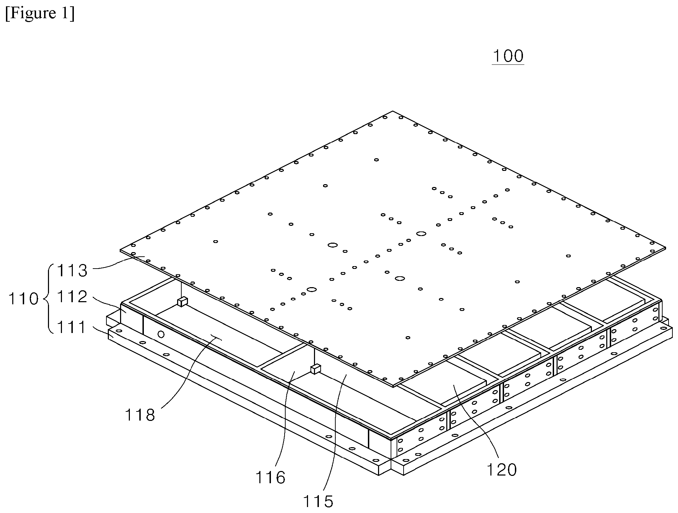

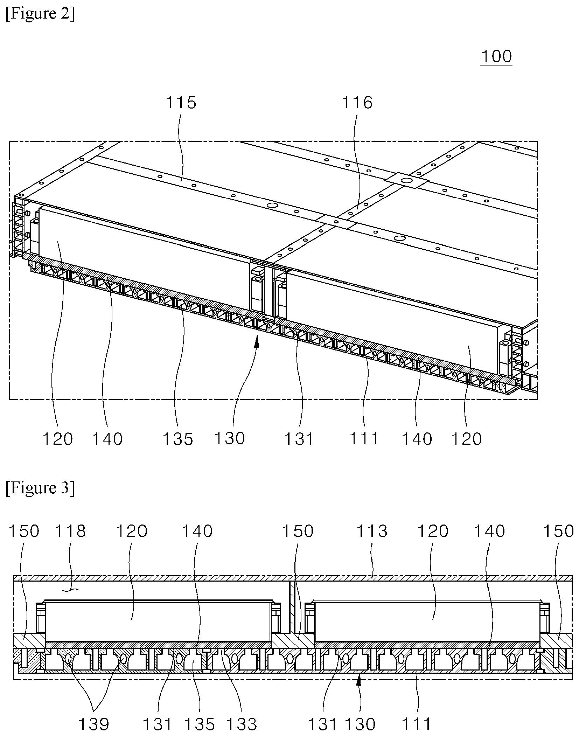

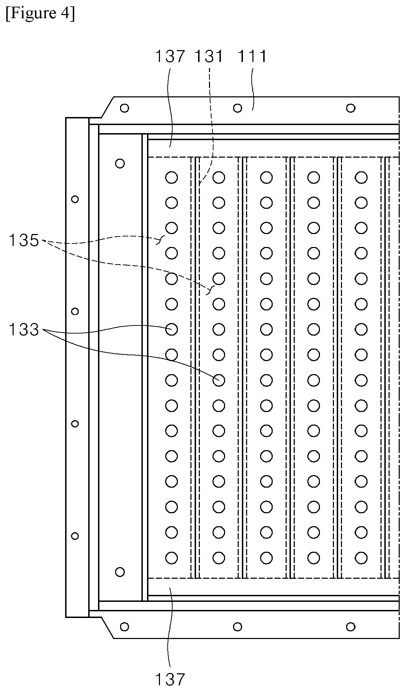

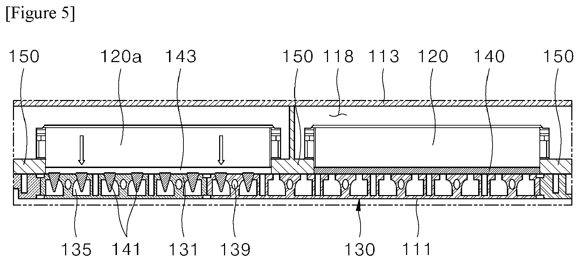

FIG. 1 is a perspective view schematically illustrating a battery package according to the present invention, FIG. 2 is a cross-sectional view schematically illustrating the battery package in FIG. 1 with a thermally conductive member and a drain installed under the battery module, FIG. 3 is a cross-sectional view schematically illustrating the battery package in FIG. 1 taken along the line I-I, FIG. 4 is a plan view schematically illustrating the battery package in FIG. 1 with a support rib and a drain hole formed in the lower plate thereof according to the present invention, and FIG. 5 is a cross-sectional view schematically illustrating a thermally conductive member melting and flowing down into a drain hole during thermal runaway of the battery module according to the present invention.

Referring to FIGS. 1 to 5, a battery package 100 according to an embodiment of the present invention includes a pack case 110, a plurality of battery modules 120, a drain 130 and a thermally conductive member 140.

The pack case 110 includes a lower plate 111, a side plate 112 surrounding the perimeter of the lower plate 111 and an upper plate 113 covering the upper portion of the side plate 112. The lower plate 111 and the upper plate 113 are rectangular, and the side plate 112 has square frame shape to surround the perimeter of the lower plate 111 and the upper plate 113. The pack case 110 is made of a material with excellent thermal conductivity, such as aluminum, so as to dissipate the thermal energy of the battery module 120.

A plurality of barrier beams 115 are installed inside the pack case 110 to partition the accommodating space 118 where the battery module 120 is accommodated. A plurality of center beams 116 are installed between the plurality of barrier beams 115 to support the plurality of barrier beams 115. The barrier beams 115 and the center beams 116 form a grid-shaped accommodating space. The barrier beam 115 has a straight shape to support the lower plate 111 and the upper plate 113. The lengths of the plurality of center beams 116 are the same as the spacing between the barrier beams 115. In addition, the end portions of the barrier beams 115 support the side plates 112. The barrier beam 115 and the center beam 116 block the flame and gas in the accommodating space 118 from spreading to the neighboring accommodating space 118. In addition, the barrier beam 115 and the center beam 116 reinforce the rigidity of the pack case 110. Accordingly, even when the pack case 110 is subjected to an external shock or vibration, the pack case 110, the barrier beam 115 and the center beam 116 may prevent the battery package 100 from deforming or collapsing.

The plurality of barrier beams 115 may be arranged perpendicular to the lengthwise direction of the drain channel 134 described below. Since the plurality of barrier beams 115 are perpendicular to the drain channel 134, the rigidity of the pack case 110 along the left-right directions and the front-rear directions may be further reinforced. Accordingly, the pack case 110 may be prevented from deforming or collapsing by external shock or vibration.

Each of the plurality of battery modules 120 is accommodated in the accommodating space 118 of the pack case 110. The battery module 120 is formed by stacking a plurality of battery cells. The battery cell may be any one of a cylindrical battery cell, a prismatic battery cell, or a pouch-type battery cell. The battery cell includes an electrode assembly immersed in an electrolyte solution. The electrode assembly is formed by stacking or winding a cathode, an anode and a separator.

Terminals (not shown) of different polarities are provided to two sides of the battery module 120, respectively. The terminals of the battery module 120 are electrically connected to a plurality of bus bars (not shown) arranged in a bus bar frame (not shown). The bus bars may connect the battery modules 120 in series and in parallel depending on the capacity and output voltage of the battery package 100.

The drain 130 is disposed under the battery module 120. The drain 130 may be formed integrally with or separately from the lower plate 111 of the pack case 110. The drain 130 forms a space to which the melted thermally conductive member 140 flows down. The drain 130 is includes a material having excellent thermal conductivity. The drain 130 also functions as a heat sink that dissipates heat together with the thermally conductive member 140.

The thermally conductive member 140 is arranged between the battery module 120 and the drain 130, and the thermally conductive member 140 melted during thermal runaway of the battery module 120 flows down to the drain 130. As the melted material 141 of the thermally conductive member 140 flows down to the drain 130, an insulation space 143 is formed between the battery module 120 and the drain 130. The melted material 141 flown down to the drain 130 is separated from the lower surface of the battery module 120, and the insulation space 143 is filled with air. As the thermally conductive member 140, a thermal resin or a thermal pad having a flat plate shape and made of a material with excellent thermal conductivity may be employed.

The thermally conductive member 140 transmits thermal energy generated in the battery module 120 to the drain 130 and the lower plate 111 during normal operation of the battery package 100. Accordingly, during normal operation of the battery package 100, the thermally conductive member 140 functions as a heat dissipation member or thermally conductive member 140 that transmits thermal energy generated from the battery module 120 to the drain 130 and the lower plate 111.

In addition, the battery module 120 may ignite or undergo thermal runaway during the charge and discharge process. The thermally conductive member 140 melts during thermal runaway of the battery module 120 and flows down to the drain 130 to form an insulation space 143 where the thermally conductive member 140 is removed. Accordingly, heat of approximately 600-800°C generated during thermal runaway of the battery module 120 may be blocked from being conducted to the drain 130 and the lower plate 111 by the insulation space 143. As a result, high-temperature heat generated from the ignited battery module 120 is blocked by the insulation space 143 from being conducted to the neighboring battery module 120. In addition, even when high-temperature heat generated from the battery module 120 is conducted to the drain 130 to some extent through the insulation space 143, the neighboring battery module 120 may be prevented from undergoing chain reaction of a thermal runaway.

In addition, since a plurality of battery modules 120 are isolated in respective accommodating spaces 116 thereof by the barrier beam 115 and the center beam 116, the barrier beam 115 may prevent thermal energy from spreading or transmitting to the neighboring accommodating spaces 116 despite some battery modules 120 undergoing thermal runaway.

In this way, when some battery modules 120 undergo thermal runaway, the insulation space 143 blocks the chain reaction of thermal runaway event through the drain 130 and the lower plate 111, and the barrier beam 115 and the center beam 116 suppress the chain reaction of thermal runaway from occurring in the neighboring space.

In addition, the thermally conductive members 140 according to the present invention may selectively provide a heat dissipation function and an insulation function depending on the temperature range of the battery module 120.

Since lithium ion batteries are known to undergo thermal runaway at about 600-800°C, it is preferable that the thermally conductive member 140 according to the present invention melts at about 450-550°C and flows down to the drain 130. Apparently, since the thermal runaway temperature of the battery module 120 may vary depending on the components of the constituent materials, the ceramicization temperature of the thermally conductive member 140 may be designed through a thermal runaway experiment of the battery module 120.

The drain 130 includes a plurality of support ribs 131, a plurality of drain holes 133 and a plurality of drain channels 135.

The plurality of support ribs 131 are provided on the lower plate 111 of the pack case 110 and support the thermally conductive member 140. The plurality of support ribs 131 may be manufactured simultaneously with the lower plate 111 when the lower plate 111 is extruded. In addition, the plurality of support ribs 131 may be manufactured separately from the lower plate 111 and then bonded to the lower plate 111 by welding, etc. Since the plurality of support ribs 131 support the thermally conductive member 140, the thermally conductive member 140 may be in contact with the lower surface of the battery module 120 and prevented from being lifted off the lower surface of the battery module 120. In addition, the plurality of support ribs 131 also serve to reinforce the rigidity of the pack case 110.

A plurality of drain holes 133 are provided between the plurality of support ribs 131. Since the plurality of drain holes 133 are arranged between the plurality of support ribs 131, the rigidity of the pack case 110 is hardly degraded by the plurality of drain holes 133.

The plurality of drain channels 135 are provided under the plurality of drain holes 133. The width of the drain channels 135 is larger than the plurality of drain holes 133. The plurality of drain channels 135 may be formed along the left-right directions or the forward-backward directions of the lower plate 111.

The plurality of drain channels 135 are parallel to the lower plate 111. The plurality of drain channels 135 may be arranged at equal intervals. Here, the plurality of drain channels 135 may have straight shape parallel or perpendicular to the lengthwise direction of the battery module 120. The plurality of drain channels 135 may be parallel to the extrusion direction during the extrusion molding of the lower plate 111.

The plurality of drain holes 133 may be arranged in one row or multiple rows along the lengthwise direction of the plurality of drain channels 135 for each drain channel 135. Here, the plurality of drain holes 133 may be arranged at equal intervals. In addition, the plurality of drain holes 133 may have circular, oval, polygonal or short slit shape. Accordingly, the melted material 141 of the thermally conductive member 140 may flow down to the corresponding drain channel 135 through the plurality of drain holes 133. In addition, since the plurality of drain holes 133 are arranged along the lengthwise direction of the drain channel, the rigidity of the lower plate 111 may be prevented from weakening. However, when one or two drain holes 133 have elongated shape in each drain channel 135, the rigidity of the drain 130 will be degraded.

The drain 130 further includes one or more ventilation channels 137 connecting the plurality of drain channels 135. The one or more ventilation channels 137 are connected to the outside. When the battery module 120 undergoes thermal runaway, the thermally conductive member 140 may generate gas as the same melts. Most of the gas flows into the drain channel 135 and then flows into the ventilation channel 137, and the gas in the ventilation channel 137 is discharged to the outside. In addition, some of the gas may be discharged to the accommodating space 118. Accordingly, the battery module 120 undergoing thermal runaway may be prevented from being heated again by the high-temperature gas.

The one or more ventilation channels 137 are connected to the lengthwise end of a plurality of drain channels 135. The ventilation channel 137 is arranged on the periphery of the lower plate 111. Here, the ventilation channel 137 is arranged perpendicularly to the drain channel 135. The ventilation channel 137 may be formed by subjecting the periphery of the lower plate 111 to forming. Apparently, the ventilation channel 137 may be manufactured separately and then welded to the lower plate 111.

The drain 130 may further include a plurality of cooling channel parts 139 provided in the lower plate 111. A cooling medium such as coolant flows through the cooling channel 139. Accordingly, the drain 130 may also serve as a heat sink that cools the battery module 120.

The cooling channel 139 is provided inside a plurality of support ribs 131. Here, the cooling channel 139 may be parallel to the lengthwise direction of the support ribs 131. The cooling channel 139 may be provided in some of the support ribs 131 or in all of the support ribs 131. The cooling channel 139 may be appropriately designed considering the capacity or size of the battery package 100.

The battery package 100 may further include a load supporting member 150 supporting the battery module 120. The load supporting member 150 may have a block shape. The load supporting member 150 stably fixes the battery module 120. The load supporting member 150 may have various shapes as long as the position of the battery module 120 can be fixed.

The load supporting member 150 prevents the battery module 120 from descending when the thermally conductive member 140 melts and flows down to the drain 130. Accordingly, when the thermally conductive member 140 is removed between the lower portion of the battery module 120 and the drain 130, the insulation space 143 may be stably maintained between the battery module 120 and the drain 130.

The load supporting member 150 supports two lengthwise ends of the battery module 120. Here, the load supporting member 150 may support the lower surface of the battery module 120.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery package comprising:
a pack case;
a plurality of battery modules accommodated in an accommodating space of the pack case;
a drain arranged under the plurality of battery modules; and
a thermally conductive member arranged between the plurality of battery modules and the drain, the thermally conductive member melting at a predetermined temperature or higher and flowing down to the drain.

2. The battery package of claim 1, wherein the drain comprises:
a plurality of support ribs provided on the lower plate of the pack case and supporting the thermally conductive member;
a plurality of drain holes provided between the plurality of support ribs; and
a plurality of drain channels provided under the drain holes.

3. The battery package of claim 2, wherein the plurality of drain channels are provided on the lower plate in parallel to each other.

4. The battery package of claim 3, wherein the plurality of drain holes are arranged along lengthwise direction of the plurality of drain channels.

5. The battery package of claim 2, wherein the plurality of support ribs include a thermally conductive material.

6. The battery package of claim 2, wherein the drain further comprises one or more ventilation channels connecting the plurality of drain channels.

7. The battery package of claim 6, wherein the one or more ventilation channels are connected to lengthwise ends of the plurality of drain channels.

8. The battery package of claim 6, wherein the one or more ventilation channels are arranged perpendicular to the plurality of drain channels.

9. The battery package of claim 2, wherein the drain further comprises a plurality of cooling channels provided in the lower plate.

10. The battery package of claim 9, wherein the plurality of cooling channels are provided in the plurality of support ribs.

11. The battery package of claim 9, wherein the plurality of cooling channels are provided parallel to lengthwise direction of the support rib.

12. The battery package of claim 1, further comprising a load supporting member supporting the plurality of battery modules.

13. The battery package of claim 12, wherein the load supporting member prevents the plurality of battery modules from descending when the thermally conductive member melts and flows down to the drain.

14. The battery package of claim 12, wherein the load supporting member supports two lengthwise ends of the plurality of battery modules.

15. The battery package of claim 1, further comprising a plurality of barrier beams installed across the pack case to partition the accommodating space.

16. The battery package of claim 15, wherein the plurality of barrier beams are arranged perpendicular to lengthwise direction of the plurality of drain channels.

17. The battery package of claim 15, further comprising a plurality of center beams installed between and supporting the plurality of barrier beams.
